# EUROPEAN PATENT APPLICATION

(11) **EP 2 322 781 A1**
(43) Date of publication of application: **18.05.2011**
(21) Application number: 09811458.0
(22) Date of filing: 28.08.2009
(51) Int. Cl.: F02C 3/28, C10J 3/46, C10K 1/00, F01K 23/10, F02C 6/18

(54) **INTEGRATED COAL GASIFICATION COMBINED CYCLE POWER GENERATION APPARATUS**

(30) Priority: 08.09.2008 JP 2008229519
(71) Applicant: Mitsubishi Heavy Industries, Ltd., Tokyo 108-8215 (JP)
(72) Inventor: TAKASE, Soken, Nagasaki-shi Nagasaki 851-0392 (JP); OTA, Katsuhiro, Tokyo 108-8215 (JP); HASHIMOTO, Takao, Tokyo 108-8215 (JP); FUJII, Takashi, Tokyo 108-8215 (JP)
(74) Representative: Fiussello, Francesco
(86) International application number: PCT/JP2009/065101
(87) International publication number: WO 2010/026932

(57) **Abstract**

Provided is an air-blown integrated coal gasification combined cycle power generation system equipped with a carbon-dioxide capturing device, in which the integrated coal gasification combined cycle power generation system eliminates the need for an air separator by obtaining a new carrier source that replaces nitrogen gas serving as a carrier gas for pressurizing and carrying pulverized coal and char. In an integrated coal gasification combined cycle power generation system that employs an air combustion method of using air as an oxidizing agent to generate coal gas in a gasification furnace (4) and that supplies the coal gas to a gas turbine (9) after separating and capturing carbon dioxide from the coal gas in a carbon-dioxide capturing device (8), a portion of the carbon dioxide separated and captured by the carbon-dioxide capturing device (8) is used as a carrier gas for pulverized coal and char.

## Description

### Technical Field

The present invention relates to integrated coal gasification combined cycle power generation systems that perform combined-cycle power generation using coal as fuel.

### {Background Art}

In the related art, there is a known integrated coal gasification combined cycle (IGCC) power generation system that drives a gas turbine by gasifying coal serving as fuel and that generates electricity by utilizing the driving force of the gas turbine and exhaust heat from the gas turbine.
With regard to such an integrated coal gasification combined cycle power generation system, an oxygen combustion type that separates combustion exhaust gas from the gas turbine into carbon dioxide (CO₂) and water (H₂O) by using oxygen as an oxidizing agent is known. In this case, because the combustion exhaust gas can be separated into carbon dioxide and water by cooling the combustion exhaust gas using an exhaust-gas condenser, the carbon dioxide can be readily captured (for example, see Patent Literature 1).

On the other hand, in an integrated coal gasification combined cycle power generation system of an air combustion (also called "air-blown") type that uses air as an oxidizing agent, since the combustion exhaust gas from the gas turbine contains nitrogen gas, it is more efficient to install a carbon-dioxide capturing device at a position upstream of the gas turbine if the carbon dioxide is to be captured.

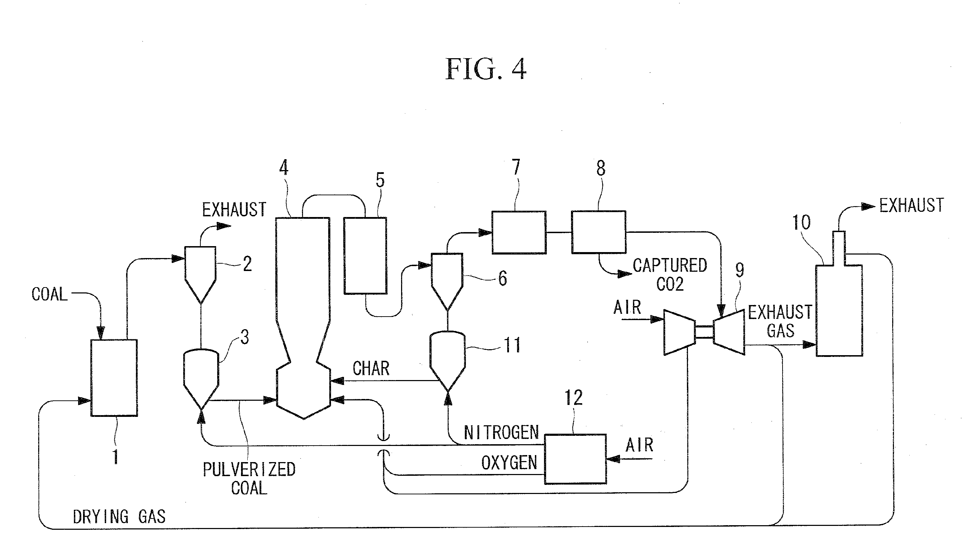

Fig. 4 is a configuration diagram of an example of the related art, illustrating a carbon-dioxide-capturing integrated coal gasification combined cycle power generation system of an air combustion (air-blown) type (referred to as "air-blown IGCC power generation system" hereinafter).
In this air-blown IGCC power generation system, drying gas and coal serving as a raw material are first introduced to a coal pulverizer 1 where the coal is dry-pulverized, thereby producing pulverized coal. The pulverized coal is introduced to a cyclone 2 where the pulverized coal is separated from exhaust, and is captured by a hopper 3. Subsequently, pressurizer-carrier nitrogen gas supplied from an air separator 12, to be described later, carries the pulverized coal in the hopper 3 to a gasification furnace 4 where the pulverized coal is gasified. Coal gas obtained as a result of the gasification in the gasification furnace 4 in this manner is supplied to a char capturing device 6 via a gas cooler 5. When gasifying the pulverized coal in the gasification furnace 4, compressed air supplied from a gas turbine 9, to be described later, and oxygen supplied from the air separator 12 are used as oxidizing agents.

In the char capturing device 6, char generated together with the coal gas generated by gasifying the pulverized coal is separated therefrom. The coal gas is desulfurized by passing through a desulfurizer 7 and is subsequently supplied to a carbon-dioxide capturing device 8.
In the carbon-dioxide capturing device 8, carbon dioxide in the coal gas is separated and captured.
On the other hand, the coal gas with the carbon dioxide separated therefrom serves as a fuel gas for the gas turbine 9 and is supplied to a combustor where the coal gas is combusted, whereby high-temperature, high-pressure combustion exhaust gas is generated. The combustion exhaust gas is emitted as exhaust gas after driving a turbine in the gas turbine 9. A main shaft of the gas turbine 9 is coupled to a generator (not shown) and drives the generator, thereby generating electricity.

A portion of the high-temperature exhaust gas emitted from the gas turbine 9 is supplied as a drying gas to the coal pulverizer 1, whereas the remaining portion is supplied to an exhaust-gas boiler 10 so as to be used for generating steam. The exhaust gas used for generating steam in the exhaust-gas boiler 10 undergoes necessary treatments before being emitted to the atmosphere.

The steam generated in the exhaust-gas boiler 10 is supplied to a steam turbine (not shown) or the like for power generation. The drying gas to be used by mixing the emitted gas from the gas turbine 9 with the exhaust gas after being used for generating steam in the exhaust-gas boiler 10 is a low-oxygen exhaust gas containing about 11 volume percent of water.

The char captured by the aforementioned char capturing device 6 is captured by a hopper 11 and is subsequently returned to the gasification furnace 4 by the nitrogen gas supplied as a pressurizer-carrier gas from the air separator 12. The char returned to the gasification furnace 4 is used as a raw material for the gasification together with the pulverized coal. The air separator 12 is a device that takes in air from the atmosphere and separates the air into nitrogen and oxygen gases.

### Citation List

### Patent Literature

### PTL 1

Japanese Unexamined Patent Application, Publication No. Hei 4-1428

### Summary of Invention

### Technical Problem

In the integrated coal gasification combined cycle power generation system (air-blown IGCC power generation system) in the related art described above, there is a problem in that an increase in the amount of auxiliary steam and an increase in power for driving auxiliary equipment resulting from the capturing of carbon dioxide causes the plant efficiency to decrease by several percent, as compared with a plant type that does not capture the carbon dioxide.
On the other hand, the nitrogen gas produced by the air separator 12 is used as the carrier gas for pressurizing and carrying the pulverized coal and the char respectively in the hoppers 3 and 11. This is because, when pressurizing the pulverized coal and the char, an inert gas with low oxygen concentration is used for preventing a dust explosion and the like so as to ensure safety. Therefore, it is necessary for the air separator 12 to consume power for driving auxiliary equipment in order to produce the pressurizer-carrier nitrogen gas, making the air separator 12 another factor that lowers the plant efficiency.

Because the power for driving auxiliary equipment for operating the air separator lowers the plant efficiency in this manner in the air-blown IGCC power generation system in the related art described above, it is desirable to eliminate the need for the air separator by obtaining a carrier gas source that can replace the nitrogen gas serving as the carrier gas supplied from the air separator for pressurizing and carrying the pulverized coal and the char.

The present invention has been made in view of the circumstances described above, and an object thereof is to provide an air-blown integrated coal gasification combined cycle power generation system equipped with a carbon-dioxide capturing device, in which the integrated coal gasification combined cycle power generation system eliminates the need for an air separator by obtaining a new carrier gas source that replaces nitrogen gas serving as a carrier gas supplied from the air separator for pressurizing and carrying pulverized coal and char.

### Solution to Problem

In order to solve the aforementioned problems, the present invention employs the following solutions.
In an integrated coal gasification combined cycle power generation system according to an aspect of the present invention that employs an air combustion method of using air as an oxidizing agent to generate coal gas in a gasification furnace and that supplies a fuel gas, which is obtained by separating and capturing carbon dioxide from the coal gas in a carbon-dioxide capturing device, to a gas turbine, a portion of the carbon dioxide separated and captured by the carbon-dioxide capturing device is used as a carrier gas for pulverized coal and char.

With such an integrated coal gasification combined cycle power generation system, since the portion of the carbon dioxide separated and captured by the carbon-dioxide capturing device is used as the carrier gas for the pulverized coal and the char, an air separator for producing nitrogen as a carrier gas is not necessary.

In the integrated coal gasification combined cycle power generation system according to the above aspect of the present invention, it is preferable that the portion of the carbon dioxide separated and captured by the carbon-dioxide capturing device be used by being mixed with a drying gas for coal so that the water concentration in the drying gas is reduced, thereby increasing the drying efficiency of the coal.

In the integrated coal gasification combined cycle power generation system according to the above aspect of the present invention, it is preferable that the carbon-dioxide capturing device be of a type that absorbs the carbon dioxide by using a multistage flash drum, and that high-pressure-stage outlet gas from the flash drum be used as the carrier gas so that the carrier gas in a high-pressure state can be used, whereby the energy required by a compressor or the like for pressurizing the carrier gas can be reduced.

### Advantageous Effects of Invention

According to the present invention, since the portion of the carbon dioxide separated and captured by the carbon-dioxide capturing device is used as the carrier gas for the pulverized coal and the char, and an air separator for producing nitrogen as a carrier gas is not necessary, there is no consumption of power for driving auxiliary equipment required for the operation of an air separator, whereby the plant efficiency of the integrated coal gasification combined cycle power generation system can be correspondingly increased.

### Brief Description of Drawings

Fig. 1 is a configuration diagram illustrating an embodiment of an integrated coal gasification combined cycle power generation system according to the present invention.
Fig. 2 is a configuration diagram illustrating a first modification of the integrated coal gasification combined cycle power generation system shown in Fig. 1.
Fig. 3 is a configuration diagram illustrating a specific configuration example of a carbon-dioxide capturing device in a second modification of the integrated coal gasification combined cycle power generation system shown in Fig. 1.
Fig. 4 is a configuration diagram illustrating an integrated coal gasification combined cycle power generation system in the related art.

### Description of Embodiment

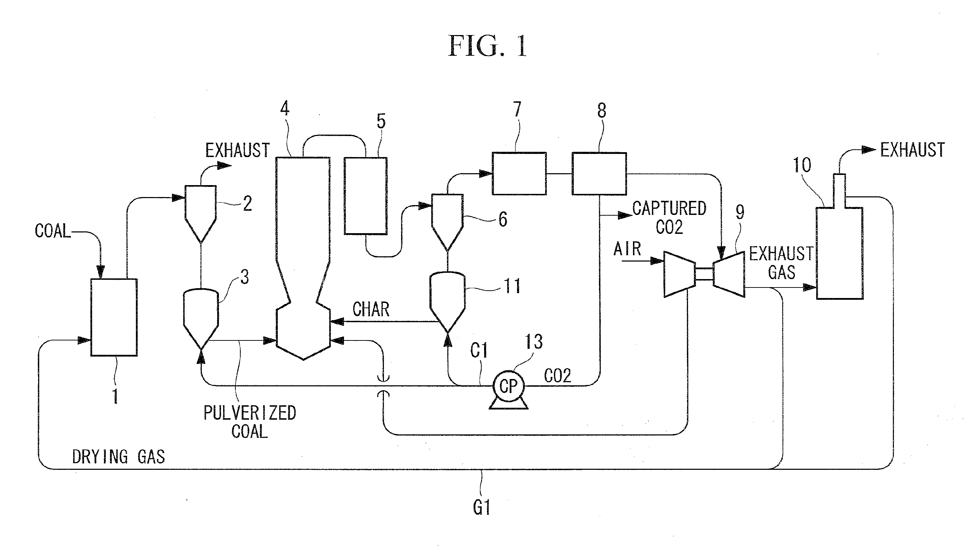

An embodiment of an integrated coal gasification combined cycle power generation system according to the present invention will be described below with reference to the drawings.
The integrated coal gasification combined cycle power generation system in the embodiment shown in Fig. 1 employs an air combustion method of using air as an oxidizing agent to generate coal gas in a gasification furnace 4, and separates and captures carbon dioxide from the coal gas by using a carbon-dioxide capturing device 8 before supplying the carbon dioxide to a gas turbine 9. Specifically, the integrated coal gasification combined cycle power generation system shown in Fig. 1 is a carbon-dioxide-capturing integrated coal gasification combined cycle power generation system of an air combustion (air-blown) type (referred to as "air-blown IGCC power generation system" hereinafter).

The air-blown IGCC power generation system uses a portion of exhaust gas as a drying gas after the exhaust gas has fulfilled its role in the gas turbine 9 and an exhaust-gas boiler 10, to be described later, and supplies coal, serving as a raw material, to a coal pulverizer 1 together with this drying gas. The coal pulverizer 1 heats the coal supplied by the drying gas and pulverizes the coal into small particles while removing water from the coal so as to produce pulverized coal.
The pulverized coal produced in this manner is carried to a cyclone 2 by the drying gas. In the cyclone 2, a gas component, such as the drying gas, and the pulverized coal (particle component) are separated from each other, and the gas component is emitted from a hopper 3. On the other hand, the pulverized coal corresponding to the particle component falls by gravity so as to be captured by the hopper 3.

The captured pulverized coal in the hopper 3 is carried into the gasification furnace 4 by carbon dioxide introduced as a pressurizer-carrier gas (carrier gas) from the carbon-dioxide capturing device 8, to be described later.
Char, to be described later, and the pulverized coal serving as a raw material of coal gas are supplied to the gasification furnace 4 and are gasified therein using compressed air supplied from the gas turbine 9 as an oxidizing agent, whereby coal gas is produced.
The coal gas obtained as a result of the gasification in the gasification furnace 4 in this manner is guided from an upper part of the gasification furnace 4 to a gas cooler 5 where the coal gas is cooled. After being cooled in the gas cooler 5, the coal gas is supplied to a char capturing device 6.

In the char capturing device 6, char generated together with the coal gas generated by gasifying the pulverized coal is separated therefrom. The coal gas flows out from an upper part of the char capturing device 6 and is desulfurized by passing through a desulfurizer 7 before being supplied to the carbon-dioxide capturing device 8.
In the carbon-dioxide capturing device 8, carbon dioxide in the coal gas is separated and captured. A portion of the separated and captured carbon dioxide is to be used as a carrier gas for the pulverized coal and the char and is pressure-fed to the hoppers 3 and 11 by a compressor 13 via a carbon-dioxide supply line C1, whereas the remaining portion is appropriately captured.

The coal gas with the carbon dioxide separated therefrom is used as a fuel gas for the gas turbine 9. The fuel gas is supplied to a combustor of the gas turbine 9 so as to be combusted, whereby high-temperature, high-pressure combustion exhaust gas is generated.
The combustion exhaust gas is emitted as high-temperature exhaust gas after driving a turbine in the gas turbine 9. Regarding the gas turbine 9 driven in this manner, since a main shaft thereof that rotates together with the turbine is coupled to a gas-turbine generator (not shown), the gas-turbine generator is driven accordingly, whereby electricity can be generated.

A portion of the high-temperature exhaust gas emitted from the gas turbine 9 is supplied as a high-temperature drying gas to the coal pulverizer 1 via an exhaust-gas supply line G1, whereas the remaining portion is supplied to the exhaust-gas boiler 10 so as to be used as a heat source for generating steam. Although the exhaust gas used for generating steam in the exhaust-gas boiler 10 undergoes necessary treatments before being emitted to the atmosphere, a portion thereof is to be used as a drying gas by being mixed with the emitted gas introduced from the gas turbine 9 and is supplied to the coal pulverizer 1 via the exhaust-gas supply line G1.
The steam generated in the exhaust-gas boiler 10 is supplied to a steam turbine (not shown) or the like for power generation. The drying gas obtained by mixing the emitted gas from the gas turbine 9 with the exhaust gas after being used for generating steam in the exhaust-gas boiler 10 is a low-oxygen exhaust gas containing about 11 volume percent of water.

The char captured by the aforementioned char capturing device 6 falls by gravity so as to be captured by the hopper 11. The char within the hopper 11 is returned to the gasification furnace 4 by using the carbon dioxide supplied from the carbon-dioxide capturing device 8 as the carrier gas. The char returned to the gasification furnace 4 is used as a raw material for the gasification together with the pulverized coal.
Accordingly, the pulverized coal obtained by pulverizing the coal is gasified in the gasification furnace 4 by using air as an oxidizing agent, thereby producing coal gas and char. The coal gas is used as a combustion gas in the gas turbine 9. The char separated from the coal gas is supplied again to the gasification furnace 4 so as to be gasified.

In this case, the portion of the carbon dioxide separated and captured by the carbon-dioxide capturing device 8 is introduced to the compressor 13 where the pressure thereof is increased, and the carbon dioxide is supplied to the hopper 3 for the pulverized coal and the hopper 11 for the char so as to be used as the carrier gas for the pulverized coal and the char.
When the portion of the carbon dioxide captured by the carbon-dioxide capturing device 8 is used as the carrier gas for the pulverized coal and the char in this manner, the reaction temperature in the gasification furnace 4 tends to decrease since the molar specific heat of the carbon dioxide flowing into the gasification furnace 4 is greater than that of nitrogen.

Therefore, in order to prevent the reaction temperature within the gasification furnace 4 from decreasing, the gasification furnace 4 is operated while increasing the air ratio thereof. However, producing the coal gas by increasing the air ratio of the gasification furnace 4 leads to a decrease in the calorific value (per unit volume) of the produced coal gas.
When the calorific value of the produced coal gas decreases in this manner, stable operation of the gas turbine 9 becomes difficult. However, because the coal gas with the decreased calorific value undergoes carbon dioxide removal in the carbon-dioxide capturing device 8 before serving as a fuel gas, the calorific value of the fuel gas increases due to the removal of the carbon dioxide.

In such a condition, since the increase in the calorific value of the fuel gas due to the removal of the carbon dioxide can compensate for the decrease in the calorific value of the coal gas caused by the increased air ratio, stable operation of the gas turbine 9 becomes possible even when the carbon dioxide is used as the carrier gas. Specifically, the amount by which the calorific value of the coal gas produced while increasing the air ratio has decreased and the amount by which the calorific value has increased due to the removal of the carbon dioxide are substantially equal to each other or are values with not much difference therebetween; thus, there is ultimately not a significant change in the calorific value of the fuel gas used for the operation of the gas turbine 9.

As a result, since the use of the carbon dioxide as the carrier gas for the pulverized coal and the char ultimately does not hinder the operation of the gas turbine 9, this eliminates the need for an air separator for producing nitrogen as a carrier gas. Consequently, with the removal of the air separator from the integrated coal gasification combined cycle power generation system of the present invention, there is no consumption of power for driving auxiliary equipment required for the operation of the air separator, thereby increasing the plant efficiency by about 1 percent.

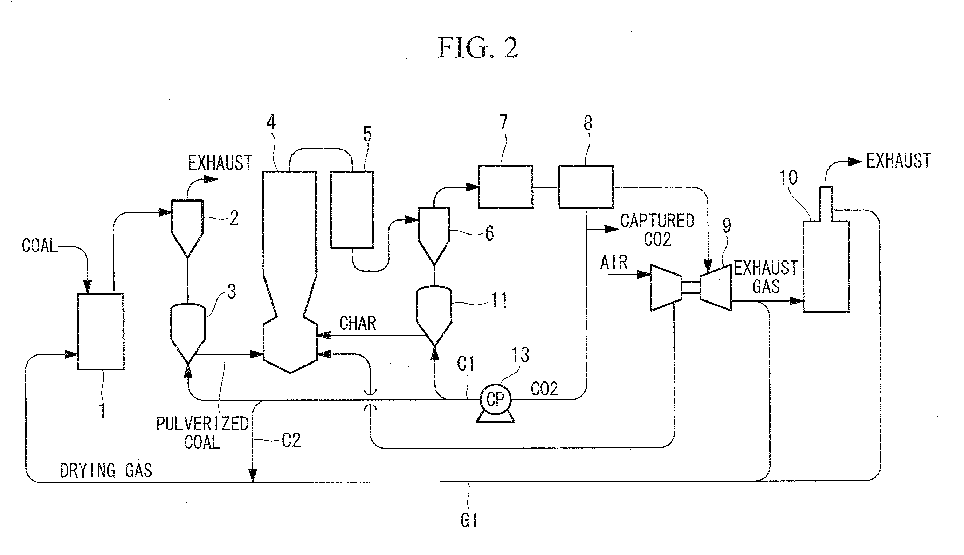

Next, a first modification of the integrated coal gasification combined cycle power generation system according to the present invention will be described with reference to Fig. 2. Components similar to those in the above-described embodiment are given the same reference numerals, and detailed descriptions thereof will be omitted.
In this modification, a portion of the carbon dioxide separated and captured by the carbon-dioxide capturing device 8 is used by being mixed with the drying gas. Specifically, the portion of the carbon dioxide separated and captured by the carbon-dioxide capturing device 8 is used not only as the carrier gas for the pulverized coal and the char by being increased in pressure by the compressor 13 and subsequently supplied to the hopper 3 for the pulverized coal and the hopper 11 for the char, but is also used as the drying gas to be supplied to the coal pulverizer 1 by being mixed with the exhaust gas. Therefore, a carbon-dioxide tributary line C2 that branches off from the carbon-dioxide supply line C1 at a position downstream of the compressor 13 and merges with the exhaust-gas supply line G1 is provided. Because the carbon-dioxide tributary line C2 is a line for the drying gas, which does not need to be increased in pressure as much as the carrier gas, the pressure is appropriately controlled by providing a pressure control valve (not shown) or the like therein.

By mixing the portion of the carbon dioxide captured by the carbon-dioxide capturing device 8 with the drying gas in this manner, the water concentration in the drying gas, which is mainly exhaust gas having a relatively high water concentration, is reduced, thereby increasing the drying efficiency of the coal in the coal pulverizer 1. Specifically, regarding the drying gas obtained by mixing the carbon dioxide, which has a low water concentration, and the exhaust gas, which has a high water concentration, the percentage of the exhaust gas having a high water concentration in the mixture is reduced so that the water concentration in the entire drying gas correspondingly decreases, whereby the drying efficiency (amount of evaporation/water content in coal) of the coal can be increased if the temperature conditions are the same.
Assuming that the water content in the coal is 40 percent, the drying efficiency is increased by about 14 percent when the water content in the drying gas is reduced from 11 volume percent to 1 volume percent.

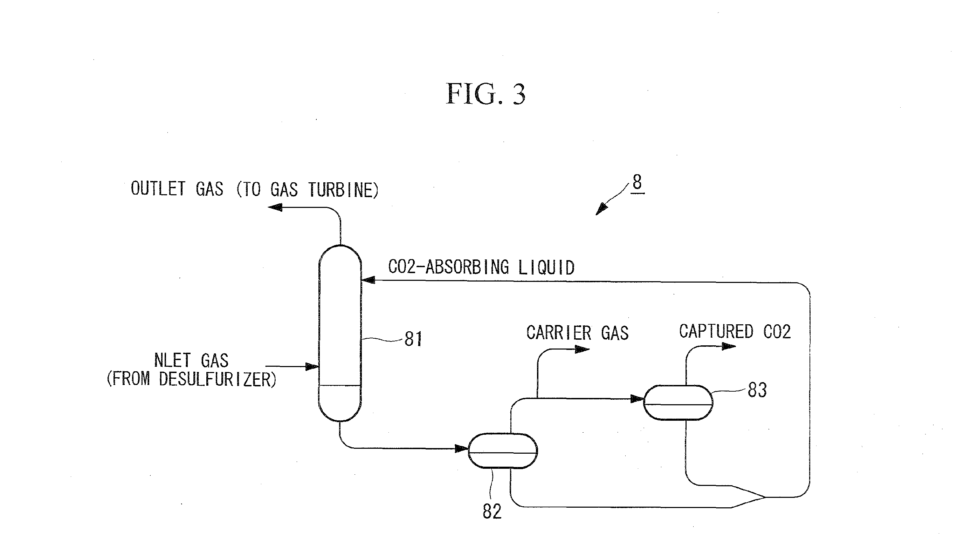

Next, a second modification of the integrated coal gasification combined cycle power generation system according to the present invention will be described with reference to Fig. 3. Components similar to those in the above-described embodiment are given the same reference numerals, and detailed descriptions thereof will be omitted.

In this modification, the aforementioned carbon-dioxide capturing device 8 is configured to absorb carbon dioxide by using a multistage flash drum, and uses high-pressure-stage outlet gas from the flash drum as the carried gas.

In detail, the carbon-dioxide capturing device 8 shown in Fig. 3 is of a two-stage type that introduces coal gas (inlet gas) to a carbon-dioxide absorption tower 81 from the desulfurizer 7, absorbs carbon dioxide via a first-stage flash drum 82 and a second-stage flash drum 83, and subsequently supplies a fuel gas (outlet gas) to the gas turbine 9 from an outlet of the carbon-dioxide absorption tower 81.
In such a carbon-dioxide capturing device 8 equipped with the two-stage flash drum, the outlet gas from the first-stage flash drum 82 positioned upstream at a high-pressure stage is used as the carrier gas. The captured carbon dioxide flows outward from the second-stage flash drum 83 at a low-pressure stage.

By employing such a configuration, since the carrier gas in the high-pressure state can be introduced from the carbon-dioxide capturing device 8, the compressor 13 used for pressure-feeding the carrier gas to the hoppers 3 and 11 can have a lower pressure-feeding capability. Specifically, since the carrier gas can have a sufficient carrying capability even if the compressor 13 has a low pressure-feeding capability, the energy required for pressurizing the carrier gas can be reduced. As a result, the integrated coal gasification combined cycle power generation system can achieve increased plant efficiency in accordance with the reduction in the energy consumed by the compressor 13.

Accordingly, because the aforementioned integrated coal gasification combined cycle power generation system of the present invention uses a portion of the carbon dioxide separated and captured by the carbon-dioxide capturing device 8 as the carrier gas for the pulverized coal and the char and thus eliminates the need for an air separator for producing nitrogen as a carrier gas, there is no consumption of power for driving auxiliary equipment required for the operation of an air separator, whereby the plant efficiency of the integrated coal gasification combined cycle power generation system can be correspondingly increased.

Furthermore, in the integrated coal gasification combined cycle power generation system of the present invention, a portion of the carbon dioxide separated and captured by the carbon-dioxide capturing device 8 is mixed with the coal drying gas so that the water concentration in the drying gas is reduced, whereby the drying efficiency of the coal can be increased. Such an increase in the drying efficiency is also effective for increasing the plant efficiency of the integrated coal gasification combined cycle power generation system.

Furthermore, in the integrated coal gasification combined cycle power generation system of the present invention, the high-pressure carrier gas is introduced from the carbon-dioxide capturing device 8 so that the energy consumed by the compressor 13 can be reduced, whereby the plant efficiency can be increased.
The present invention is not limited to the above-described embodiment, and appropriate alterations are permissible so long as they do not depart from the spirit of the invention.

### Reference Signs List

- 1: coal pulverizer
- 2: cyclone
- 3, 11: hopper
- 4: gasification furnace
- 5: gas cooler
- 6: char capturing device
- 7: desulfurizer
- 8: carbon-dioxide capturing device
- 9: gas turbine
- 10: exhaust-gas boiler
- 13: compressor

## Claims

1. An integrated coal gasification combined cycle power generation system that employs an air combustion method of using air as an oxidizing agent to generate coal gas in a gasification furnace and that supplies a fuel gas, which is obtained by separating and capturing carbon dioxide from the coal gas in a carbon-dioxide capturing device, to a gas turbine,
wherein a portion of the carbon dioxide separated and captured by the carbon-dioxide capturing device is used as a carrier gas for pulverized coal and char.

2. The integrated coal gasification combined cycle power generation system according to Claim 1, wherein the portion of the carbon dioxide separated and captured by the carbon-dioxide capturing device is used by being mixed with a drying gas for coal.

3. The integrated coal gasification combined cycle power generation system according to Claim 1 or 2, wherein the carbon-dioxide capturing device is of a type that absorbs the carbon dioxide by using a multistage flash drum, and wherein high-pressure-stage outlet gas from the flash drum is used as the carrier gas.
